# EUROPEAN PATENT SPECIFICATION

(11) **EP 3 695 631 B1**
(45) Date of publication and mention of the grant of the patent: **10.12.2025**
(21) Application number: 18785894.9
(22) Date of filing: 04.10.2018
(51) Int. Cl.: H04W 8/06, H04W 28/086

(54) **CHANGE OF 5G AMF NODE IN CASE OF OVERLOAD**
ÄNDERUNG DER 5G AMF KNOTEN IM FALL VON ÜBERLASTUNG
CHANGEMENT DU NOEUD 5G AMF EN CAS DE SURCHARGE

(30) Priority: 10.10.2017 US 201762570277 P
(43) Date of publication of application: 19.08.2020
(73) Proprietor: Nokia Technologies Oy, 02610 Espoo (FI)
(72) Inventor: CHANDRAMOULI, Devaki, Plano, TX 75025 (US)
(74) Representative: Page White Farrer
(86) International application number: PCT/EP2018/077017
(87) International publication number: WO 2019/072681

(56) References cited:
- "3rd Generation Partnership Project; Technical Specification Group Services and System Aspects; General Packet Radio Service (GPRS) enhancements for Evolved Universal Terrestrial Radio Access Network (E-UTRAN) access (Release 15)", 3GPP STANDARD ; TECHNICAL SPECIFICATION ; 3GPP TS 23.401, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V15.1.0, 18 September 2017 (2017-09-18), pages 1 - 397, XP051336975, [retrieved on 20170918]
- NOKIA ET AL: "pCR TR 28.802 Add use cases to support management for AMF Set", vol. SA WG5, no. Sophia Antipolis, France; 20170821 - 20170825, 4 September 2017 (2017-09-04), XP051336408, Retrieved from the Internet <URL:http://www.3gpp.org/ftp/tsg_sa/WG5_TM/TSGS5_114/Docs/> [retrieved on 20170904]
- KDDI: "23.501: Introducing congestion and overload control for AMF and SMF", vol. SA WG2, no. Spokane, USA; 20170116 - 20170120, 16 January 2017 (2017-01-16), XP051216488, Retrieved from the Internet <URL:http://www.3gpp.org/ftp/Meetings_3GPP_SYNC/SA2/Docs/> [retrieved on 20170116]
- NOKIA ET AL: "TS 23.501: OI#5 Overload Control", vol. SA WG2, no. Ljubljana, Slovenia; 20171023 - 20171027, 26 October 2017 (2017-10-26), XP051346555, Retrieved from the Internet <URL:http://www.3gpp.org/ftp/Meetings_3GPP_SYNC/SA2/_Update02/> [retrieved on 20171026]
- "3rd Generation Partnership Project; Technical Specification Group Services and System Aspects; System Architecture for the 5G System; Stage 2 (Release 15)", 13 November 2017 (2017-11-13), XP051379263, Retrieved from the Internet <URL:http://www.3gpp.org/ftp/tsg%5Fsa/WG2%5FArch/Latest%5FSA2%5FSpecs/Latest%5Fdraft%5FS2%5FSpecs/> [retrieved on 20171113]

## Description

### BACKGROUND

In the Fifth Generation (5G) mobile network standards, multiple radio access network configurations must be supported. In this multiple configuration scheme, access and mobility management functions may support user equipment (UE), which has registered with the mobile network. However, the access and mobility management functions may become unbalanced with one or more access and mobility management functions being assigned to support many more UEs than other access and mobility management functions, thereby decreasing the efficiency with which the UEs are supported by the access and mobility management functions.

NOKIA ET AL: "pCR TR 28.802 Add use cases to support management for AMF set", S5-174474 relates to reducing operational effort and cost for AMF management by supporting SON for AMF set in 5G management system in TR 28.802.

KDDI: "23.501: Introducing congestion and overload control for AMF and SMF", S2-170299 relates to 5GC supporting congestion and overload control per DNN regarding the control granularity and per slice instance, and to implementing a control mechanism for MME in both AMF and SMF, separately. The document from 3GPP "3rd Generation Partnership Project; Technical Specification Group Services and System Aspects; General Packet Radio Service (GPRS) enhancements for Evolved Universal Terrestrial Radio Access Network (E-UTRAN) access (Release 15)", 3GPP STANDARD; TECHNICAL SPECIFICATION; 3GPP TS 23.401, V15.1.0, 18 September 2017, pages 1-397, describes load sharing between MMEs. Sections 4.3.7.2 and 4.3.7.3 discuss a method of load balancing between MMEs and MME control for overload.

### BRIEF SUMMARY

In the 5G mobile networks specification, there is no function to support proactive load control. Initial load balancing is done as part of access and mobility management function (AMF) selection which is done at an initial UE registration. Further, when an AMF goes on planned maintenance or when the AMF fails, the Radio Access Network (RAN) is notified and/or detects that the AMF has failed, and then selects a different AMF. Furthermore, when an AMF overload is detected, overload control procedures are implemented. These procedures include a non-access stratum (NAS) reject timer, Radio Resource Control (RRC) reject eWaitTimer, access class barring, and other methods.

However, there is no method for an AMF to perform proactive load balancing. Proactive load balancing or rebalancing redirects only a portion of the UE(s) registered to the AMF to an alternate AMF while serving some UE(s). This flexibility in serving UE(s) provides mobile network operators the ability to rebalance UEs without any impact to the network and UE(s).

A method, apparatus, and computer program product are provided in accordance with certain example embodiments in order to provide proactive load control in a mobile network.

The present invention is defined by the appended independent claims. Certain more specific aspects are defined by the appended dependent claims.

### BRIEF DESCRIPTION OF THE DRAWINGS

Having thus described certain example embodiments of the invention in general terms, reference will now be made to the accompanying drawings, which are not necessarily drawn to scale, and wherein:
Figure 1A is a networked system in accordance with an example embodiment of the present disclosure
Figure 1B is an alternate view of the networked system of Figure 1A in accordance with an example embodiment of the present disclosure;
Figure 2 illustrates Radio Access Network (RAN) configurations in accordance with certain example embodiments of the present disclosure;
Figure 3 is a block diagram of a core network apparatus configured in accordance with an example embodiment of the present disclosure; and
Figures 4-5 are flowcharts illustrating methods for providing proactive load balancing in accordance with an example embodiment of the present disclosure.

### DETAILED DESCRIPTION

Some embodiments of the present invention will now be described more fully hereinafter with reference to the accompanying drawings, in which some, but not all, embodiments of the invention are shown. Indeed, various embodiments of the invention may be embodied in many different forms and should not be construed as limited to the embodiments set forth herein; rather, these embodiments are provided so that this disclosure will satisfy applicable legal requirements. Like reference numerals refer to like elements throughout. As used herein, the terms "data," "content," "information," and similar terms may be used interchangeably to refer to data capable of being transmitted, received and/or stored in accordance with embodiments of the present invention. Thus, use of any such terms should not be taken to limit the spirit and scope of embodiments of the present invention.

Additionally, as used herein, the term 'circuitry' refers to (a) hardware-only circuit implementations (e.g., implementations in analog circuitry and/or digital circuitry); (b) combinations of circuits and computer program product(s) comprising software and/or firmware instructions stored on one or more computer readable memories that work together to cause an apparatus to perform one or more functions described herein; and (c) circuits, such as, for example, a microprocessor(s) or a portion of a microprocessor(s), that require software or firmware for operation even if the software or firmware is not physically present. This definition of 'circuitry' applies to all uses of this term herein, including in any claims. As a further example, as used herein, the term 'circuitry' also includes an implementation comprising one or more processors and/or portion(s) thereof and accompanying software and/or firmware. As defined herein, a "computer-readable storage medium," which refers to a physical storage medium (e.g., volatile or non-volatile memory device), may be differentiated from a "computer-readable transmission medium," which refers to an electromagnetic signal.

A method, apparatus and computer program product are provided in accordance with an example embodiment to provide proactive load control in a mobile network as described herein.

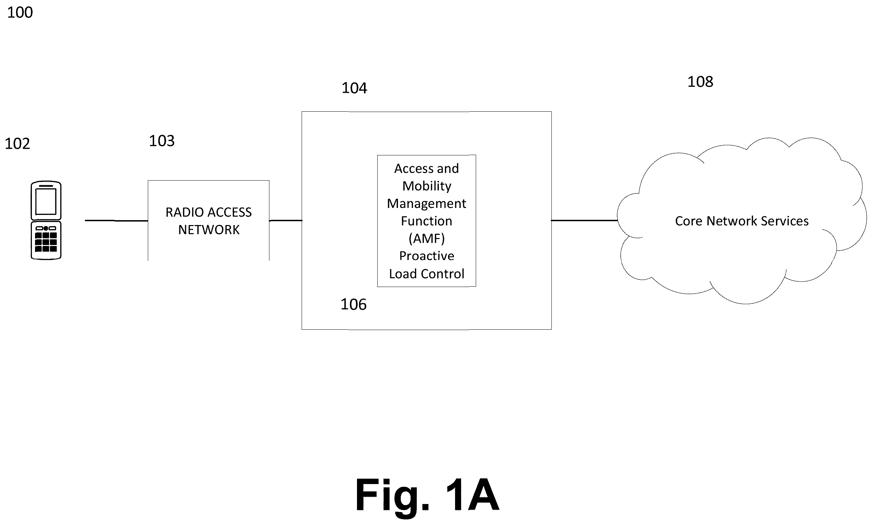

Figure 1A is a networked system 100 in accordance with an example embodiment of the present disclosure. Figure 1A specifically illustrates User Equipment (UE) 102, which may be in communication with a Radio Access Network (RAN) 103 and Access and Mobility Management Function (AMF) 104. The AMF 104 may, in turn, be in communication with core network services 108. Various methods including the use of an AMF proactive load control 106 may be used by the AMF 104.

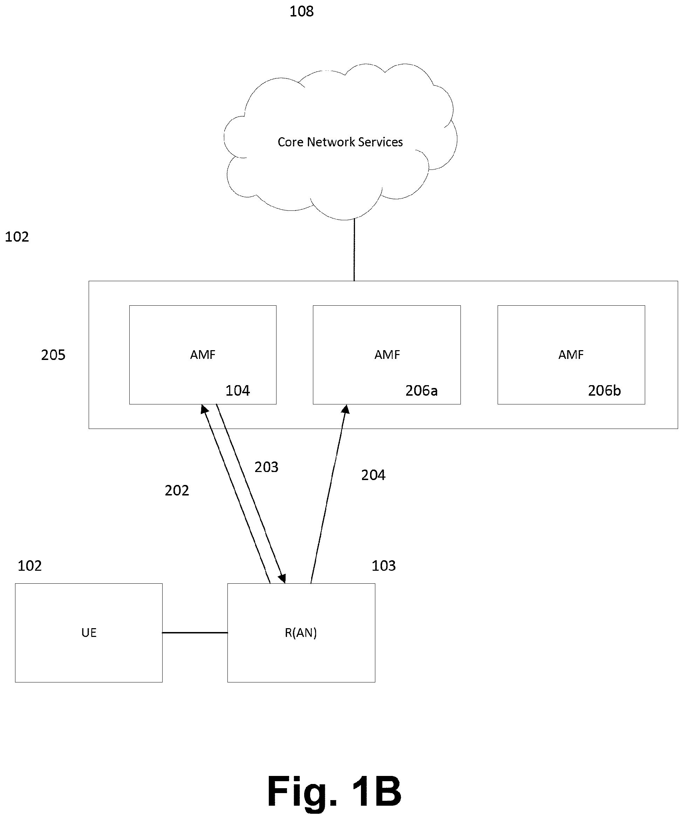

Figure 1B is an alternate view of the networked system of Figure 1A in accordance with an example embodiment of the present disclosure. As shown in Figure 1B, the AMF 104 is a part of the AMF set 205 which includes alternative AMFs 204a and 204b, which provide the same network services and functions to the UE 102 as the AMF 104. The components of Figure 1B may comprise a network slice of services and functions provided to UE 102.

Figure 1B also illustrates an initial message 202 from the UE 102 through the RAN 103. As shown, the AMF 104 (using AMF proactive load control 106) sends a redirection request 203 to the RAN 103 and in response to the redirection request the RAN 103 send a redirected message 204 to alternate AMF 206a.The AMF proactive load control 106 is configured to permit a cross-section of its UE subscribers that are registered on the AMF 104 (within the AMF Set 205) to be moved to another AMF within the same AMF set 205 (e.g., AMF 206a or 206b) with minimal impact on the network and end users (users of UE 102).

The present claims are directed to the following aspect of the present disclosure. The AMF 104 may request (such as redirection request 203) some or all of the RAN 103 nodes to redirect a cross-section of the UE(s) returning from a IDLE mode to be redirected to another AMF within the same AMF set 205. In some examples, the AMF 104 may provide a proactive overload control indication in the redirection request if the AMF utilization approaches overload or pre-overload levels. In some examples, the control indication may indicate a predefined percentage or a predefined number of UE(s) that should be redirected to another AMF. For example, the AMF proactive load control 106 may provide a proactive overload control indication as part of the redirection request 203, with a request to redirect 25% of the IDLE UE(s) 102 to another AMF. When the RAN 103 receives the redirection request 203, it may be configured to redirect 1 out of 4 next generation application protocol (NGAP) messages from IDLE mode UEs to another AMF or redirect first 25 out of 100 NGAP messages from IDLE mode UEs to another AMF.

In some examples, the AMF includes stored UE contexts in a Data Storage network function (UDSF). For UE(s) 102 in IDLE mode, when the UE 102 subsequently returns from IDLE mode and the RAN 103 receives an initial message 203 (which may comprise a NAS message with a 5G SAE-Temporary Mobile Subscriber Identity (S-TMSI) or Globally Unique AMF Identifier (GUAMI) pointing to the AMF 104 that requested for redirection), the RAN 103 should select a different AMF, such as alternate AMF 206a from the same AMF set 205 and forward the NAS message (redirected message 204) to the alternate AMF 206a. In some embodiments, the RAN 103 will not reject any request or enable access control restriction when the RAN receives a request for proactive load control or redirection request 202 from the connected AMF(s).

When the AMF 104 has determined to stop redirection as described below, the AMF proactive control function 106 can indicate, by sending a cease redirection request, that it can serve all UE(s) in IDLE mode to stop the redirection.

In some examples, the AMF Proactive load control function 106 is configured to pro-actively re-balance the AMF 104 load prior to reaching overload in order to prevent an overload situation.

In some examples, the AMF Proactive load control function 106 should not issue a redirection request when the AMF 104 becomes overloaded because a Load Balancing function should have ensured that the other AMFs in the AMF set 205 area are similarly overloaded.

In general the core network will support Control Plane Congestion and Overload Control, which in addition to proactive load balancing described herein, includes several other complementary procedures. For example, the congestion and overload control includes AMF Load Balancing which permits UE(s) 102 that are entering into an AMF Region/AMF Set 205 to be directed to an appropriate AMF in a manner that achieves load balancing between AMFs. This is achieved by setting a Weight Factor for each AMF, such that the probability of an AMF being selected is proportional to its Weight Factor. The Weight Factor is typically set according to the capacity of an AMF node relative to other AMF nodes. The Weight Factor is sent from the AMF to the RAN 103 (e.g., a 5G access node (AN)) via NGAP messages.

In some examples of AMF Load Balancing, an operator of a mobile network may decide to change the Weight Factor after the establishment of NGAP connectivity as a result of changes in the AMF capacities. For example, a newly installed AMF may be given a much higher Weight Factor for an initial period of time making it faster to increase its load. However, in some examples, the Weight Factor is not changed frequently. For example, in a mature network, changes on a monthly basis could be anticipated, due to the addition of RAN or core network (CN) nodes.

In some networks, the AMF 104 may be configured to select a specific AMF for UE(s) configured for low access priority with a different load balance than that used for AMF selection for other UEs.

When network slicing is deployed, load balancing by the RAN 103 node is only performed between AMFs that belong to the same selected Network Slice Selection Assistance Information (S-NSSAI(s)) within the same AMF set 205, e.g., AMFs with the same public land mobile network (PLMN) and AMF Set ID value.

The RAN 103 node may have Load Balancing parameters adjusted beforehand (e.g., the Weight Factor is set to zero if all subscribers are to be removed from the AMF, which will route new entrants to other AMFs within an AMF Set).

The congestion and overload control also includes AMF control of overload. In some examples, the AMF 104 contains mechanisms for avoiding and handling overload situations. This can include proactive load control to avoid overload with minimal impacts on the network load and end users described herein, reactive overload control, restricting UE(s), and NAS congestion control.

Under unusual circumstances, if the AMF 104 has reached overload situation, the AMF may be configured to restrict the load that the RAN nodes are generating, if the RAN is configured to enable the overload restriction. This can be achieved by the AMF invoking an N2 overload procedure to all or to a proportion of the RAN nodes with which the AMF has N2 connections. To reflect the amount of load that the AMF wishes to reduce, the AMF can adjust the proportion of RAN nodes which are sent NGAP OVERLOAD START message, and the content of the OVERLOAD START message.

In some examples, the AMF should select the RAN nodes at random (so that if two AMFs within an AMF Set are overloaded, they do not both send OVERLOAD START messages to exactly the same set of 5G ANs). Using the OVERLOAD START message, the AMF can request the RAN node to: reject RRC connection requests that are for non-emergency, non-exception reporting and non-high priority mobile originated services; reject new RRC connection requests for 5GS NAS Mobility Management signaling targeted (e.g. for Registration update procedure) for that AMF; or only permit RRC connection requests for emergency sessions and mobile terminated services for that AMF. This AMF configuration blocks emergency session requests from UEs with universal SIMs (USIMs) provisioned with Access Classes 11 and 15 when they are in their Home Public Land Mobile Network/Equivalent Home Public Land Mobile Network HPLMN/EHPLMN and from UEs with USIMs provisioned with Access Classes 12, 13 and 14 when they are in their home country, only permit RRC connection requests for high priority sessions, exception reporting and mobile terminated services for that AMF; or reject new RRC connection requests from UEs that access the network with low access priority.

In some examples, the radio resource control (RRC) connection requests listed in this clause also include the request for RRC Connection Resume. In some examples, when rejecting an RRC connection request for overload reasons, the RAN 103 indicates to the UE 102 an appropriate timer value that limits further RRC connection requests for a period of time.

In some examples, an RAN node supports rejecting of RRC connection establishments for certain UEs. Additionally, an RAN node may provide support for the barring of UEs. In some examples, during an overload situation, the AMF should attempt to maintain support for emergency services and for a Mobile Positioning System (MPS).

In some examples, when the AMF is recovering, the AMF can either: send OVERLOAD START messages with new percentage value that permit more traffic to be carried, or the AMF sends OVERLOAD STOP messages.

The congestion and overload control also includes NAS level Congestion control. In some examples, to protect the network from congestion the AMF has the option of rejecting NAS request messages. NAS level congestion control may contain the functions: "DNN based congestion control" and "General NAS level Mobility Management control".

Under general overload conditions the AMF may reject Mobility Management signaling requests from UEs. When a NAS request is rejected, a Mobility Management back-off timer may be sent by the AMF. While the Mobility Management back-off timer is running, the UE may not initiate any NAS request for Mobility Management procedures except for Detach procedure, requests for UE(s) with high priority access, requests for emergency services and mobile terminated services. After any such Detach procedure, the back-off timer may continue to run. If the UE receives a paging request from the AMF while the Mobility Management back off timer is running, the UE may stop the Mobility Management back-off timer and initiate the Service Request procedure or the Tracking Area Update procedure.

In some examples of NAS level Congestion control, the DNN based Session Management congestion control may be activated by a session management function (SMF) due to a congestion situation at the SMF. The congestion control may include configuration, by a restart or recovery condition of a user plane function (UPF), or by a partial failure or recovery of a UPF for a particular UPF(s).

In some examples, the SMF may reject the Session Management requests from the UE (e.g. packet data unit (PDU) Session establishment/modification request) with a Session Management back-off timer when SM congestion associated with a data network name (DNN) is detected. If the UE provides no DNN, then the SMF uses a default DNN selected for the PDU session establishment.

In some examples, upon reception of the Session Management back-off timer in the NAS Session Management reject, if DNN was provided in the Session Management Request message that was rejected, the UE will not initiate any Session Management procedures for the congested DNN, at least until the timer expires. In some examples, the UE may initiate Session Management procedures for other DNNs.

In another example, if a DNN is not provided in the Session Management Request message that was rejected, the UE will not initiate any Session Management requests without DNN. The UE may initiate Session Management procedures for a specific DNN.

In some examples, certain network changes, such as a cell or PLMN change do not stop the Session Management back-off timer.

In some examples, the UE is allowed to initiate the Session Management procedures for high priority access and emergency services even when the Session Management back-off timer is running. For example, if the UE receives a network initiated Session Management Request message for the congested DNN while the Session Management back-off timer is running, the UE may stop the Session Management back-off timer associated with this DNN and respond to the SMF. In some examples, the UE may support a separate Session Management back-off timer for every DNN that the UE may activate.

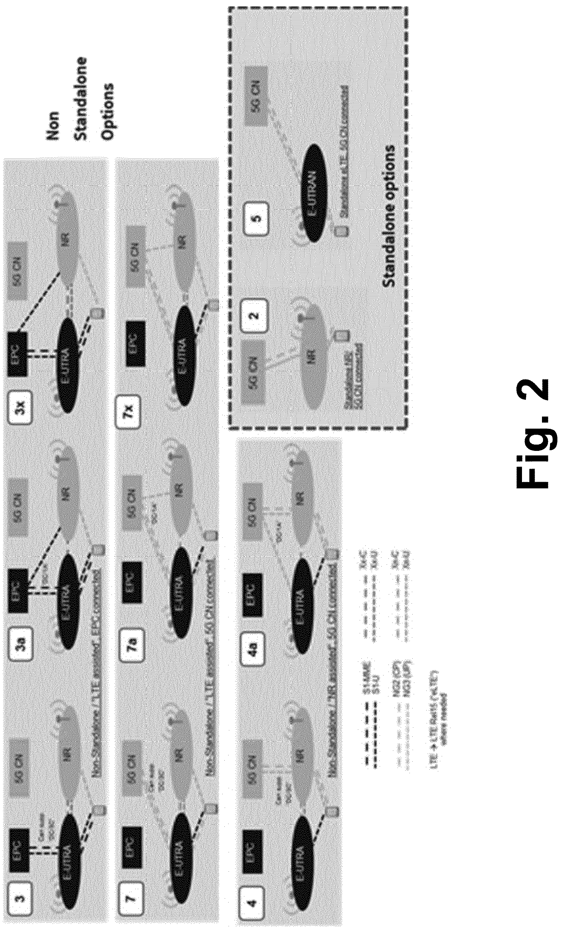

Figure 2 illustrates alternate Radio Access Network (RAN) configurations including non-standalone configurations 3, 3A, and 3x which are long term evolution (LTE) assisted and evolved packet core (EPC) connected. The non-standalone options of one embodiment also include configurations 7, 7a, and 7x which are LTE assisted and 5G core network (CN) connected. Furthermore, configurations 4 and 4a are new radio (NR) assisted and 5G CN connected. The standalone options shown include configurations 2 and 5 which are NR/5G CN connected and LTE 5G CN connected, respectively. Table 1 illustrates RAN agreement on the RAN nodes for the various connection options. Each of the architecture configurations shown in Figure 2 may be supported by the embodiments described herein.

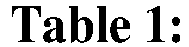

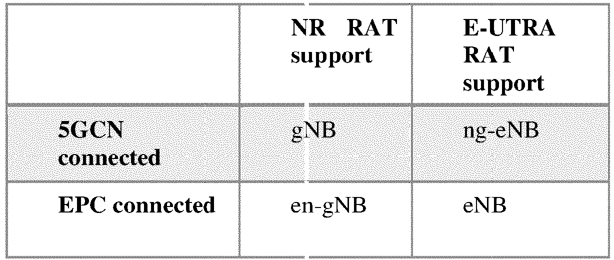

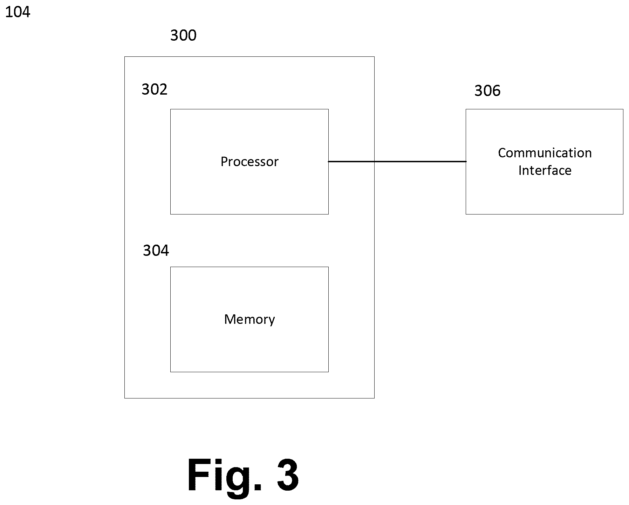

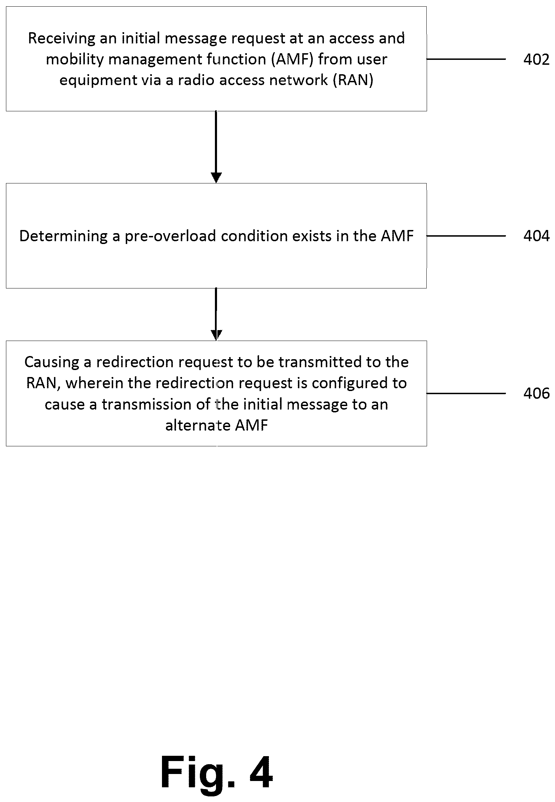

Turning now to Figure 3, examples of an AMF apparatus (including AMF 104) may be embodied as a core network apparatus as configured in accordance with an example embodiment of the present disclosure. As described below in conjunction with the flowchart of Figure 4, the AMF 104 of an example embodiment may be configured to perform the functions described herein. In any instance, the AMF 104 may more generally be embodied by a computing device, such as a server, a personal computer, a computer workstation or other type of computing device including those functioning as a user equipment and/or a wireless local area network. Regardless of the manner in which the AMF 104 is embodied, the apparatus of an example embodiment may be configured as shown in Figure 3 so as to include, be associated with or otherwise be in communication with processing circuitry 300 including, for example, a processor 302 and a memory 304 and, in some embodiments, and/or a communication interface 306.

In the processing circuitry 300, the processor 302 (and/or co-processors or any other circuitry assisting or otherwise associated with the processor) may be in communication with the memory device 304 via a bus for passing information among components of the AMF 104. The memory device may include, for example, one or more volatile and/or non-volatile memories. In other words, for example, the memory device may be an electronic storage device (e.g., a computer readable storage medium) comprising gates configured to store data (e.g., bits) that may be retrievable by a machine (e.g., a computing device like the processor). The memory device may be configured to store information, data, content, applications, instructions, or the like for enabling the apparatus to carry out various functions in accordance with an example embodiment of the present invention. For example, the memory device could be configured to buffer input data for processing by the processor. Additionally or alternatively, the memory device could be configured to store instructions for execution by the processor.

The AMF 104 may, in some embodiments, be embodied in various computing devices as described above. However, in some embodiments, the apparatus may be embodied as a chip or chip set. In other words, the apparatus may comprise one or more physical packages (e.g., chips) including materials, components and/or wires on a structural assembly (e.g., a baseboard). The structural assembly may provide physical strength, conservation of size, and/or limitation of electrical interaction for component circuitry included thereon. The apparatus may therefore, in some cases, be configured to implement an embodiment of the present invention on a single chip or as a single "system on a chip." As such, in some cases, a chip or chipset may constitute means for performing one or more operations for providing the functionalities described herein.

The processor 302 may be embodied in a number of different ways. For example, the processor may be embodied as one or more of various hardware processing means such as a coprocessor, a microprocessor, a controller, a digital signal processor (DSP), a processing element with or without an accompanying DSP, or various other circuitry including integrated circuits such as, for example, an ASIC (application specific integrated circuit), an FPGA (field programmable gate array), a microcontroller unit (MCU), a hardware accelerator, a special-purpose computer chip, or the like. As such, in some embodiments, the processor may include one or more processing cores configured to perform independently. A multi-core processor may enable multiprocessing within a single physical package. Additionally or alternatively, the processor may include one or more processors configured in tandem via the bus to enable independent execution of instructions, pipelining and/or multithreading.

In an example embodiment, the processor 302 may be configured to execute instructions stored in the memory device 304 or otherwise accessible to the processor. Alternatively or additionally, the processor may be configured to execute hard coded functionality. As such, whether configured by hardware or software methods, or by a combination thereof, the processor may represent an entity (e.g., physically embodied in circuitry) capable of performing operations according to an embodiment of the present disclosure while configured accordingly. Thus, for example, when the processor is embodied as an ASIC, FPGA or the like, the processor may be specifically configured hardware for conducting the operations described herein. Alternatively, as another example, when the processor is embodied as an executor of instructions, the instructions may specifically configure the processor to perform the algorithms and/or operations described herein when the instructions are executed. However, in some cases, the processor may be a processor of a specific device (e.g., an encoder and/or a decoder) configured to employ an embodiment of the present invention by further configuration of the processor by instructions for performing the algorithms and/or operations described herein. The processor may include, among other things, a clock, an arithmetic logic unit (ALU) and logic gates configured to support operation of the processor.

In embodiments that include a communication interface 306, the communication interface may be any means such as a device or circuitry embodied in either hardware or a combination of hardware and software that is configured to receive and/or transmit data from/to a network and/or any other device or module in communication with the AMF 104, such as UE, core network services, a database or other storage device, etc. In this regard, the communication interface may include, for example, an antenna (or multiple antennas) and supporting hardware and/or software for enabling communications with a wireless communication network. Additionally or alternatively, the communication interface may include the circuitry for interacting with the antenna(s) to cause transmission of signals via the antenna(s) or to handle receipt of signals received via the antenna(s). In some environments, the communication interface may alternatively or also support wired communication. As such, for example, the communication interface may include a communication modem and/or other hardware/software for supporting communication via cable, digital subscriber line (DSL), universal serial bus (USB) or other mechanisms.

Referring now to Figure 4, the operations performed, such as by the AMF proactive load control 106 embodied on AMF 104 on a core network apparatus of Figure 3 which may be embodied by or in association with processing circuitry 300, are illustrated in order to provide a warning message via a public warning system. Not all of the features of Figure 4 are recited in the appended independent claims. As shown in block 402 of Figure 4, the apparatus of this example embodiment includes means, such as the processing circuitry 300, the processor 302 or the like, for receiving an initial message request at an access and mobility management function (AMF) from user equipment via a radio access network (RAN). For example, AMF 104 may receive initial message 202 as shown in Figure 1B. In some examples, initial message 202 may comprise a NAS message from UE 102 when waking from IDLE mode. In some examples, the RAN 103 may comprise one of the configurations described in relation to Figure 2.

As shown in block 404 of Figure 4, the apparatus of this example embodiment includes means, such as the processing circuitry 300, the processor 302 or the like, for determining a pre-overload condition exists in the AMF. In some examples, the pre-overload condition will comprise a lower limit which corresponds to the utilization of the AMF approaching an overload condition and an upper limit which corresponds to an overload condition. In some examples, the pre-overload condition may comprise a condition where a predefined percentage or amount, such as 60% (lower limit)-80% (upper limit), of the AMF's capacity is utilized. For example, 60-80% of the UEs registered to the AMF 104 may be active and using the AMF. In some examples, the lower and upper limits defining the pre-overload condition may be predefined such as by an operator of the mobile network.

As shown in block 406 of Figure 4, the apparatus of this example embodiment includes means, such as the processing circuitry 300, the processor 302 or the like, for transmitting a redirection request to the RAN, wherein the redirection request is configured to cause a transmission of the initial message to an alternate AMF. For example, the RAN 103 may be caused by the redirection request 203 to send the initial message as redirection message 204 to the alternate AMF 206a. In some examples, the AMF 104 may provide a proactive overload control indication in the redirection request. For example, the control indication may indicate a certain percentage of UE(s) that should be redirected to another/alternate AMF. For example, the AMF proactive load control 106 may provide a proactive overload control indication as part of the redirection request 203, with a request to redirect a predefined percentage or a predefined amount, such as 25%, of the IDLE UE(s) 102 to another AMF. When the RAN 103 receives the redirection request 203, it may be configured to take one of the following actions: redirect 1 out of 4 NGAP messages from IDLE mode UEs to another AMF or redirect first 25 out of 100 NGAP messages from IDLE mode UEs to another AMF.

In another example, the RAN 103 may only redirect 20% or 1 out of every five initial messages received from UEs 102. In some examples, the portion of initial messages redirected may increase or decrease over time according to the redirection request or subsequent redirection requests from AMF 104. For example, as utilization of the AMF increases from 60% to 80%, the AMF proactive load control 106 may be configured to request a higher number of redirections. For example, when the AMF utilization is at 60%, the AMF proactive load control 106 may send a redirect request with a proactive overload control indication requesting redirection of 20% of the IDLE UE(s) 102. When the utilization is at 75% the AMF proactive load control 106 may send a redirect request with a proactive overload control indication requesting redirection of 30% of the IDLE UE(s) 102.

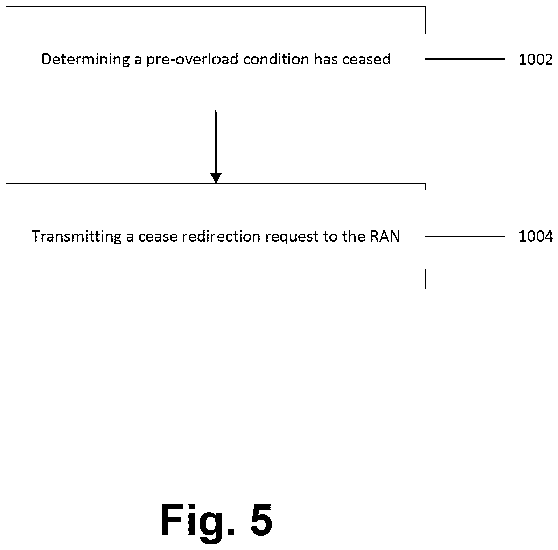

Referring now to Figure 5, the operations performed, such as by the AMF proactive load control 106 embodied on AMF 104 on a core network apparatus of Figure 3 which may be embodied by or in association with processing circuitry 300, are depicted. As shown in block 502 of Figure 5 the apparatus of this example embodiment includes means, such as the processing circuitry 300, the processor 302 or the like, for determining a pre-overload condition has ceased. In some examples, the pre-overload condition may cease when the capacity of the AMF 104 that is utilized falls below a predefined percentage such as the lower limit. For example, the AMF may become less than 60% utilized. In another example, the pre-overload condition may cease when the capacity of the AMF 104 that is utilized falls below a predefine level lower than the lower limit in order to avoid pre-overload conditions reoccurring quickly. For example, if the lower limit is 60% the pre-overload condition may cease when the AMF utilization is below 55%. In another example, if the AMF 104 becomes overloaded or enters an overload condition (e.g., greater than 80% utilized), the pre-overload condition ceases.

As shown in block 504 of Figure 5, the apparatus of this example embodiment includes means, such as the processing circuitry 300, the processor 302 or the like, for transmitting a cease redirection request to the RAN, this indicates that the AMF 104 can serve all UE(s) in IDLE mode. In some examples, the RAN 103 may then cease redirecting the initial messages received from UEs 102. In some examples, if the AMF is in an overload condition, the RAN 103 may then reject the initial messages from the UEs 102. If the AMF is below the pre-overload conditions, the RAN 103 will treat the initial messages normally and forward them from UE(s) 102 to AMF 104.

As described above, Figures 4-5 illustrate flowcharts of an apparatus, method, and computer program product according to example embodiments of the invention. It will be understood that each block of the flowcharts, and combinations of blocks in the flowcharts, may be implemented by various means, such as hardware, firmware, processor, circuitry, and/or other devices associated with execution of software including one or more computer program instructions. For example, one or more of the procedures described above may be embodied by computer program instructions. In this regard, the computer program instructions which embody the procedures described above may be stored by a memory device 304 of an apparatus employing an embodiment of the present invention and executed by processing circuitry 300, e.g., a processor 302, of the apparatus. As will be appreciated, any such computer program instructions may be loaded onto a computer or other programmable apparatus (e.g., hardware) to produce a machine, such that the resulting computer or other programmable apparatus implements the functions specified in the flowchart blocks. These computer program instructions may also be stored in a computer-readable memory that may direct a computer or other programmable apparatus to function in a particular manner, such that the instructions stored in the computer-readable memory produce an article of manufacture, the execution of which implements the function specified in the flowchart blocks. The computer program instructions may also be loaded onto a computer or other programmable apparatus to cause a series of operations to be performed on the computer or other programmable apparatus to produce a computer-implemented process such that the instructions which execute on the computer or other programmable apparatus provide operations for implementing the functions specified in the flowchart blocks.

Accordingly, blocks of the flowcharts support combinations of means for performing the specified functions and combinations of operations for performing the specified functions for performing the specified functions. It will also be understood that one or more blocks of the flowcharts, and combinations of blocks in the flowcharts, may be implemented by special purpose hardware-based computer systems which perform the specified functions, or combinations of special purpose hardware and computer instructions.

In some embodiments, certain ones of the operations above may be modified or further amplified. Furthermore, in some embodiments, additional optional operations may be included. Modifications, additions, or amplifications to the operations above may be performed in any order and in any combination.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Although specific terms are employed herein, they are used in a generic and descriptive sense only and not for purposes of limitation.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A core network apparatus comprising an access and mobility management function (104) configured to perform the characterizing features of:
cause a first request to be provided to one or more access nodes (103) to cause the one or more access nodes (103) to redirect at least some user equipment returning from an idle mode from the access and mobility management function (104) to an alternate access and mobility management function (206a), wherein the access and mobility management function (104) and the alternate access and mobility management function (206a) are part of a same access and mobility management function set; and
in response to a subsequent determination to stop redirecting the at least some user equipment returning from an idle mode from the access and mobility management function (104) to the alternate access and mobility management function (206a), cause a second request to be provided to the one or more access nodes (103) in order to cause the one or more access nodes (103) to stop redirecting the at least some user equipment returning from the idle mode to the alternate access and mobility management function (206a).

2. The core network apparatus according to claim 1, wherein the first request is caused to be provided prior to the access and mobility management function (104) reaching an overload condition, wherein the access and mobility management function (104) is further configured to, during the overload condition, reject a mobility management request from the at least some user equipment.

3. The core network apparatus according to claim 1 or 2, wherein the access and mobility management function (104) is further configured to provide to the one or more access nodes (103) a weight factor to be used by the one or more access nodes (103) to at least partially control selection of the access and mobility management function (104) to support the at least some user equipment, wherein the weight factor is proportional to a probability of the access and mobility management function (104) being selected to support the at least some user equipment.

4. The core network apparatus according to claim 3 wherein the weight factor is set according to a capacity of the access and mobility management function (104) relative to other access and mobility management functions in the same access and mobility management function set.

5. The core network apparatus according to any of claims 1 to 4 wherein, the access and mobility management function (104) is further configured to, in response to a determination of an overload condition, invoke an N2 overload procedure which involves the one or more access nodes (103) with which the access and mobility management function (104) has N2 connections, wherein, during the overload condition, the access and mobility management function (104) is configured to reject a mobility management request from the at least some user equipment.

6. The core network apparatus according to any of claims 1 to 4, wherein the access and mobility management function (104) is further configured to, during recovery from an overload condition, provide, to the one or more access nodes (103), a message that includes a percentage value to permit more traffic to be carried, and to, during the overload condition, reject a mobility management request received from a user equipment of the at least some of the user equipment, and wherein the percentage value indicates a percentage of the at least some user equipment returning from an idle mode to be redirected to the alternate access and mobility management function (206a).

7. The core network apparatus according to any of claims 1 to 4, wherein the access and mobility management function (104) is further configured to, during an overload condition and in response to rejecting a non-access stratum, NAS, request, cause a value of a mobility management back-off timer to be sent to prevent at least some NAS requests for mobility management procedures from being initiated by a user equipment of the at least some user equipment.

8. A method **characterized by** comprising:
providing, by an access and mobility management function (104), a first request to one or more access nodes (103) to cause the one or more access nodes (103) to redirect at least some user equipment returning from an idle mode from the access and mobility management function (104) to an alternate access and mobility management function (206a), wherein the access and mobility management function (104) and the alternate access and mobility management function (206a) are part of a same access and mobility management function set; and
in response to a subsequent determination, by the access and mobility management function (104), to stop redirecting the at least some user equipment returning from an idle mode from the access and mobility management function (104) to the alternate access and mobility management function (206a), providing, by the access and mobility management function (104), a second request to the one or more access nodes (103) in order to cause the one or more access nodes (103) to stop redirecting the at least some user equipment returning from the idle mode to the alternate access and mobility management function (206a).

9. The method according to claim 8 wherein the first request is provided prior to the access and mobility management function (104) reaching an overload condition, wherein during the overload condition, the method further comprises rejecting, by the access and mobility management function (104), a mobility management signalling request from the at least some user equipment.

10. The method according to claim 8 or 9 further comprising providing, by the access and mobility management function (104), to the one or more access nodes (103) a weight factor to be used by the one or more access nodes (103) to at least partially control selection by the one or more access nodes (103) of the access and mobility management function (104) to support the at least some user equipment, wherein the weight factor is proportional to a probability of the access and mobility management function (104) being selected to support the at least some user equipment.

11. The method according to claim 10 wherein the weight factor is set according to a capacity of the access and mobility management function (104) relative to other access and mobility management functions in the same access and mobility management function set.

12. The method according to any of claims 8 to 11, further comprising, in response to a determination of an overload condition, invoking an N2 overload procedure which involves the one or more access nodes (103) with which the access and mobility management function (104) has N2 connections, and, during the overload condition, rejecting a mobility management request received from a user equipment of the at least some user equipment.

13. The method according to any of claims 8 to 11 further comprising, during recovery from an overload condition, providing, by the access and mobility management function (104) and to the one or more access nodes (103), a message that includes a percentage value to permit more traffic to be carried, and, during the overload condition, rejecting, by the access and mobility management function (104), a mobility management request received from a user equipment of the at least some user equipment, and wherein the percentage value indicates a percentage of the at least some user equipment returning from an idle mode to be redirected to the alternate access and mobility management function (206a).

14. The method according to any of claims 8 to 9 further comprising, during an overload condition and in response to rejecting, by the access and mobility function (104), a non-access stratum, NAS, request, causing a value of a mobility management back-off timer to be sent to prevent at least some NAS requests for mobility management procedures from being initiated by a user equipment of the at least some user equipment.

15. A computer program comprising code, wherein when the computer program is executed by at least one processor of a core network apparatus, the core network apparatus is caused perform the method of any one of claims 8-14.

## Patentansprüche

1. Kernnetzwerkvorrichtung umfassend eine Zugangs- und Mobilitätsmanagementfunktion (104), die so konfiguriert ist, dass sie die folgenden kennzeichnenden Merkmale durchführt:
Veranlassen der Bereitstellung einer ersten Anforderung an einen oder mehrere Zugangsknoten (103), um den einen oder die mehreren Zugangsknoten (103) zu veranlassen, mindestens einige Endgeräte, die aus einem Ruhemodus zurückkehren, von der Zugangs- und Mobilitätsmanagementfunktion (104) zu einer alternativen Zugangs- und Mobilitätsmanagementfunktion (206a) umzuleiten, wobei die Zugangs- und Mobilitätsmanagementfunktion (104) und die alternative Zugangs- und Mobilitätsmanagementfunktion (206a) Teil eines selben Zugangs- und Mobilitätsmanagementfunktionssatzes sind; und
als Reaktion auf eine nachfolgende Bestimmung, das Umleiten der mindestens einigen Endgeräte, die aus einem Ruhemodus zurückkehren, von der Zugangs- und Mobilitätsmanagementfunktion (104) zu der alternativen Zugangs- und Mobilitätsmanagementfunktion (206a) zu beenden, Veranlassen der Bereitstellung einer zweiten Anforderung an den einen oder die mehreren Zugangsknoten (103), um den einen oder die mehreren Zugangsknoten (103) zu veranlassen, das Umleiten der mindestens einigen Endgeräte, die aus dem Ruhemodus zurückkehren, zu der alternativen Zugangs- und Mobilitätsmanagementfunktion (206a) zu beenden.

2. Kernnetzwerkvorrichtung nach Anspruch 1, wobei veranlasst wird, dass die erste Anforderung bereitgestellt wird, bevor die Zugangs- und Mobilitätsmanagementfunktion (104) einen Überlastzustand erreicht, wobei die Zugangs- und Mobilitätsmanagementfunktion (104) ferner konfiguriert ist, um während des Überlastzustands eine Mobilitätsmanagementanforderung von den mindestens einigen Endgeräten zurückzuweisen.

3. Kernnetzwerkvorrichtung nach Anspruch 1 oder 2, wobei die Zugangs- und Mobilitätsmanagementfunktion (104) ferner so konfiguriert ist, dass sie dem einen oder den mehreren Zugangsknoten (103) einen Gewichtungsfaktor bereitstellt, der durch den einen oder die mehreren Zugangsknoten (103) zu verwenden ist, um zumindest teilweise die Auswahl der Zugangs- und Mobilitätsmanagementfunktion (104) zu steuern, um die mindestens einigen Endgeräte zu unterstützen, wobei der Gewichtungsfaktor proportional zu einer Wahrscheinlichkeit ist, dass die Zugangs- und Mobilitätsmanagementfunktion (104) ausgewählt wird, um die mindestens einigen Endgeräte zu unterstützen.

4. Kernnetzwerkvorrichtung nach Anspruch 3, wobei der Gewichtungsfaktor entsprechend einer Kapazität der Zugangs- und Mobilitätsmanagementfunktion (104) relativ zu anderen Zugangs- und Mobilitätsmanagementfunktionen in demselben Zugangs- und Mobilitätsmanagementfunktionssatz festgelegt wird.

5. Kernnetzwerkvorrichtung nach einem der Ansprüche 1 bis 4, wobei die Zugangs- und Mobilitätsmanagementfunktion (104) ferner so konfiguriert ist, dass sie als Reaktion auf die Bestimmung eines Überlastzustands eine N2-Überlastprozedur aufruft, die den einen oder die mehreren Zugangsknoten (103) einbezieht, mit denen die Zugangs- und Mobilitätsmanagementfunktion (104) N2-Verbindungen hat, wobei die Zugangs- und Mobilitätsmanagementfunktion (104) während des Überlastzustands so konfiguriert ist, dass sie eine Mobilitätsmanagementanforderung von den mindestens einigen Endgeräten zurückweist.

6. Kernnetzwerkvorrichtung nach einem der Ansprüche 1 bis 4, wobei die Zugangs- und Mobilitätsmanagementfunktion (104) ferner so konfiguriert ist, dass sie während der Erholung von einem Überlastzustand dem einen oder den mehreren Zugangsknoten (103) eine Nachricht bereitstellt, die einen Prozentwert enthält, um die Übertragung von mehr Verkehr zuzulassen, und dass sie während des Überlastzustands eine Mobilitätsmanagementanforderung zurückweist, die von einem Endgerät der mindestens einigen Endgeräte empfangen wird, und wobei der Prozentwert einen Prozentsatz der mindestens einigen Endgeräte angibt, die aus einem Ruhemodus zurückkehren, die zu der alternativen Zugangs- und Mobilitätsmanagementfunktion (206a) umzuleiten sind.

7. Kernnetzwerkvorrichtung nach einem der Ansprüche 1 bis 4, wobei die Zugangs- und Mobilitätsmanagementfunktion (104) ferner so konfiguriert ist, dass sie während eines Überlastzustands und als Reaktion auf die Zurückweisung einer Nicht-Zugangsschicht(NAS)-Anforderung veranlasst, dass ein Wert eines Mobilitätsmanagement-Back-Off-Timers gesendet wird, um zu verhindern, dass mindestens einige NAS-Anforderungen für Mobilitätsmanagementprozeduren durch ein Endgerät der mindestens einigen Endgeräte initiiert werden.

8. Verfahren, **dadurch gekennzeichnet, dass** es umfasst:
Bereitstellen, durch eine Zugangs- und Mobilitätsmanagementfunktion (104), einer ersten Anforderung an einen oder mehrere Zugangsknoten (103), um den einen oder die mehreren Zugangsknoten (103) zu veranlassen, mindestens einige Endgeräte, die aus einem Ruhemodus zurückkehren, von der Zugangs- und Mobilitätsmanagementfunktion (104) zu einer alternativen Zugangs- und Mobilitätsmanagementfunktion (206a) umzuleiten, wobei die Zugangs- und Mobilitätsmanagementfunktion (104) und die alternative Zugangs- und Mobilitätsmanagementfunktion (206a) Teil eines selben Zugangs- und Mobilitätsmanagementfunktionssatzes sind; und
als Reaktion auf eine nachfolgende Bestimmung, durch die Zugangs- und Mobilitätsmanagementfunktion (104), das Umleiten der mindestens einigen Endgeräte, die aus einem Ruhemodus zurückkehren, von der Zugangs- und Mobilitätsmanagementfunktion (104) zu der alternativen Zugangs- und Mobilitätsmanagementfunktion (206a) zu beenden, Bereitstellen, durch die Zugangs- und Mobilitätsmanagementfunktion (104), einer zweiten Anforderung an den einen oder die mehreren Zugangsknoten (103), um den einen oder die mehreren Zugangsknoten (103) zu veranlassen, das Umleiten der mindestens einigen Endgeräte, die aus dem Ruhemodus zurückkehren, zu der alternativen Zugangs- und Mobilitätsmanagementfunktion (206a) zu beenden.

9. Verfahren nach Anspruch 8, wobei die erste Anforderung bereitgestellt wird, bevor die Zugangs- und Mobilitätsmanagementfunktion (104) einen Überlastzustand erreicht, wobei das Verfahren ferner während des Überlastzustands das Zurückweisen, durch die Zugangs- und Mobilitätsmanagementfunktion (104), einer Mobilitätsmanagementsignalisierungsanforderung von den mindestens einigen Endgeräten umfasst.

10. Verfahren nach Anspruch 8 oder 9, ferner umfassend das Bereitstellen, durch die Zugangs- und Mobilitätsmanagementfunktion (104), eines Gewichtungsfaktors an den einen oder die mehreren Zugangsknoten (103), der durch den einen oder die mehreren Zugangsknoten (103) zu verwenden ist, um zumindest teilweise die Auswahl der Zugangs- und Mobilitätsmanagementfunktion (104) durch den einen oder die mehreren Zugangsknoten (103) zu steuern, um die mindestens einigen Endgeräte zu unterstützen, wobei der Gewichtungsfaktor proportional zu einer Wahrscheinlichkeit ist, dass die Zugangs- und Mobilitätsmanagementfunktion (104) ausgewählt wird, um die mindestens einigen Endgeräte zu unterstützen.

11. Verfahren nach Anspruch 10, wobei der Gewichtungsfaktor entsprechend einer Kapazität der Zugangs- und Mobilitätsmanagementfunktion (104) relativ zu anderen Zugangs- und Mobilitätsmanagementfunktionen in demselben Zugangs- und Mobilitätsmanagementfunktionssatz festgelegt wird.

12. Verfahren nach einem der Ansprüche 8 bis 11, ferner umfassend, als Reaktion auf eine Bestimmung eines Überlastzustands, das Aufrufen einer N2-Überlastprozedur, die den einen oder die mehreren Zugangsknoten (103) einbezieht, mit denen die Zugangs- und Mobilitätsmanagementfunktion (104) N2-Verbindungen hat, und, während des Überlastzustands, Zurückweisen einer Mobilitätsmanagementanforderung, die von einem Endgerät der mindestens einigen Endgeräte empfangen wird.

13. Verfahren nach einem der Ansprüche 8 bis 11, ferner umfassend, während der Erholung von einem Überlastzustand, das Bereitstellen, durch die Zugangs- und Mobilitätsmanagementfunktion (104) und an den einen oder die mehreren Zugangsknoten (103), einer Nachricht, die einen Prozentwert enthält, um die Übertragung von mehr Verkehr zuzulassen, und, während des Überlastzustands, das Zurückweisen, durch die Zugangs- und Mobilitätsmanagementfunktion (104), einer Mobilitätsmanagementanforderung, die von einem Endgerät der mindestens einigen Endgeräte empfangen wird, und wobei der Prozentwert einen Prozentsatz der mindestens einigen Endgeräte angibt, die aus einem Ruhemodus zurückkehren, die zu der alternativen Zugangs- und Mobilitätsmanagementfunktion (206a) umzuleiten sind.

14. Verfahren nach einem der Ansprüche 8 bis 9, ferner umfassend, während eines Überlastzustands und als Reaktion auf das Zurückweisen, durch die Zugangs- und Mobilitäts funktion (104), einer Nicht-Zugangsschicht(NAS)-Anforderung, das Veranlassen, dass ein Wert eines Mobilitätsmanagement-Back-Off-Timers gesendet wird, um zu verhindern, dass mindestens einige NAS-Anforderungen für Mobilitätsmanagementprozeduren durch ein Endgerät der mindestens einigen Endgeräte initiiert werden.

15. Computerprogramm umfassend Code, wobei, wenn das Computerprogramm durch mindestens einen Prozessor einer Kernnetzvorrichtung ausgeführt wird, die Kernnetzwerkvorrichtung veranlasst wird, das Verfahren nach einem der Ansprüche 8 bis 14 durchzuführen.

## Revendications

1. Appareil de réseau central comprenant une fonction de gestion d'accès et de mobilité (104) configurée pour réaliser les caractéristiques suivantes :
faire en sorte qu'une première requête soit fournie à un ou plusieurs nœuds d'accès (103) pour amener les un ou plusieurs nœuds d'accès (103) à rediriger au moins certains équipements utilisateurs revenant d'un mode veille depuis la fonction de gestion d'accès et de mobilité (104) vers une fonction alternative de gestion d'accès et de mobilité (206a), dans lequel la fonction de gestion d'accès et de mobilité (104) et la fonction alternative de gestion d'accès et de mobilité (206a) font partie d'un même ensemble de fonctions de gestion d'accès et de mobilité ; et
en réponse à une détermination ultérieure de cesser de rediriger les au moins certains équipements utilisateurs revenant d'un mode veille depuis la fonction de gestion d'accès et de mobilité (104) vers la fonction alternative de gestion d'accès et de mobilité (206a), faire en sorte qu'une seconde requête soit fournie aux un ou plusieurs nœuds d'accès (103) afin d'amener les un ou plusieurs nœuds d'accès (103) à cesser de rediriger les au moins certains équipements utilisateurs revenant du mode veille vers la fonction alternative de gestion d'accès et de mobilité (206a).

2. Appareil de réseau central selon la revendication 1, dans lequel il est fait en sorte que la première requête soit fournie avant que la fonction de gestion d'accès et de mobilité (104) n'atteigne un état de surcharge, dans lequel la fonction de gestion d'accès et de mobilité (104) est en outre configurée pour, pendant l'état de surcharge, rejeter une requête de gestion de mobilité depuis les au moins certains équipements utilisateurs.

3. Appareil de réseau central selon la revendication 1 ou 2, dans lequel la fonction de gestion d'accès et de mobilité (104) est en outre configurée pour fournir aux un ou plusieurs nœuds d'accès (103) un facteur de pondération à utiliser par les un ou plusieurs nœuds d'accès (103) pour commander au moins partiellement une sélection de la fonction de gestion d'accès et de mobilité (104) afin de prendre en charge les au moins certains équipements utilisateurs, dans lequel le facteur de pondération est proportionnel à une probabilité que la fonction de gestion d'accès et de mobilité (104) soit sélectionnée pour prendre en charge les au moins certains équipements utilisateurs.

4. Appareil de réseau central selon la revendication 3, dans lequel le facteur de pondération est réglé en fonction d'une capacité de la fonction de gestion d'accès et de mobilité (104) par rapport à d'autres fonctions de gestion d'accès et de mobilité dans le même ensemble de fonctions de gestion d'accès et de mobilité.

5. Appareil de réseau central selon l'une quelconque des revendications 1 à 4, dans lequel la fonction de gestion d'accès et de mobilité (104) est en outre configurée pour, en réponse à une détermination d'un état de surcharge, recourir à une procédure de surcharge N2 qui implique les un ou plusieurs nœuds d'accès (103) avec lesquels la fonction de gestion d'accès et de mobilité (104) présente des connexions N2, dans lequel, pendant l'état de surcharge, la fonction de gestion d'accès et de mobilité (104) est configurée pour rejeter une requête de gestion de mobilité depuis les au moins certains équipements utilisateurs.

6. Appareil de réseau central selon l'une quelconque des revendications 1 à 4, dans lequel la fonction de gestion d'accès et de mobilité (104) est en outre configurée pour, pendant une récupération depuis un état de surcharge, fournir, aux un ou plusieurs nœuds d'accès (103), un message qui inclut une valeur de pourcentage afin d'autoriser le transport de davantage de trafic, et pour, pendant l'état de surcharge, rejeter une requête de gestion de mobilité reçue depuis un équipement utilisateur parmi les au moins certains équipements utilisateurs, et dans lequel la valeur de pourcentage indique un pourcentage des au moins certains équipements utilisateurs revenant d'un mode veille pour être redirigés vers la fonction alternative de gestion d'accès et de mobilité (206a).

7. Appareil de réseau central selon l'une quelconque des revendications 1 à 4, dans lequel la fonction de gestion d'accès et de mobilité (104) est en outre configurée pour, pendant un état de surcharge et en réponse au rejet d'une requête de strate de non-accès, NAS (*non-access stratum*), faire en sorte qu'une valeur d'un temporisateur de gestion de mobilité soit envoyée afin d'empêcher qu'au moins certaines requêtes NAS pour des procédures de gestion de mobilité ne soient lancées par un équipement utilisateur parmi les au moins certains équipements utilisateurs.

8. Procédé **caractérisé en ce qu'**il comprend :
la fourniture, par une fonction de gestion d'accès et de mobilité (104), d'une première requête à un ou plusieurs nœuds d'accès (103) pour amener les un ou plusieurs nœuds d'accès (103) à rediriger au moins certains équipements utilisateurs revenant d'un mode veille depuis la fonction de gestion d'accès et de mobilité (104) vers une fonction alternative de gestion d'accès et de mobilité (206a), dans lequel la fonction de gestion d'accès et de mobilité (104) et la fonction alternative de gestion d'accès et de mobilité (206a) font partie d'un même ensemble de fonctions de gestion d'accès et de mobilité ; et
en réponse à une détermination ultérieure, par la fonction de gestion d'accès et de mobilité (104), de cesser de rediriger les au moins certains équipements utilisateurs revenant d'un mode veille depuis la fonction de gestion d'accès et de mobilité (104) vers la fonction alternative de gestion d'accès et de mobilité (206a), la fourniture, par la fonction de gestion d'accès et de mobilité (104), d'une seconde requête aux un ou plusieurs nœuds d'accès (103) afin d'amener les un ou plusieurs nœuds d'accès (103) à cesser de rediriger les au moins certains équipements utilisateurs revenant du mode veille vers la fonction alternative de gestion d'accès et de mobilité (206a).

9. Procédé selon la revendication 8, dans lequel la première requête est fournie avant que la fonction de gestion d'accès et de mobilité (104) n'atteigne un état de surcharge, dans lequel pendant l'état de surcharge, le procédé comprend en outre le rejet, par la fonction de gestion d'accès et de mobilité (104), d'une requête de signalement de gestion de mobilité depuis les au moins certains équipements utilisateurs.

10. Procédé selon la revendication 8 ou 9, comprenant en outre la fourniture, par la fonction de gestion d'accès et de mobilité (104), aux un ou plusieurs nœuds d'accès (103) d'un facteur de pondération à utiliser par les un ou plusieurs nœuds d'accès (103) pour commander au moins partiellement une sélection par les un ou plusieurs nœuds d'accès (103) de la fonction de gestion d'accès et de mobilité (104) afin de prendre en charge les au moins certains équipements utilisateurs, dans lequel le facteur de pondération est proportionnel à une probabilité que la fonction de gestion d'accès et de mobilité (104) soit sélectionnée pour prendre en charge les au moins certains équipements utilisateurs.

11. Procédé selon la revendication 10, dans lequel le facteur de pondération est réglé en fonction d'une capacité de la fonction de gestion d'accès et de mobilité (104) par rapport à d'autres fonctions de gestion d'accès et de mobilité dans le même ensemble de fonctions de gestion d'accès et de mobilité.

12. Procédé selon l'une quelconque des revendications 8 à 11, comprenant en outre, en réponse à une détermination d'un état de surcharge, le recours à une procédure de surcharge N2 qui implique les un ou plusieurs nœuds d'accès (103) avec lesquels la fonction de gestion d'accès et de mobilité (104) présente des connexions N2, et, pendant l'état de surcharge, le rejet d'une requête de gestion de mobilité reçue depuis un équipement utilisateur parmi les au moins certains équipements utilisateurs.

13. Procédé selon l'une quelconque des revendications 8 à 11, comprenant en outre, pendant une récupération depuis un état de surcharge, la fourniture, par la fonction de gestion d'accès et de mobilité (104) et aux un ou plusieurs nœuds d'accès (103), d'un message qui inclut une valeur de pourcentage afin d'autoriser le transport de davantage de trafic, et, pendant l'état de surcharge, le rejet, par la fonction de gestion d'accès et de mobilité (104), d'une requête de gestion de mobilité reçue depuis un équipement utilisateur parmi les au moins certains équipements utilisateurs, et dans lequel la valeur de pourcentage indique un pourcentage des au moins certains équipements utilisateurs revenant d'un mode veille pour être redirigés vers la fonction alternative de gestion d'accès et de mobilité (206a).

14. Procédé selon l'une quelconque des revendications 8 à 9, comprenant en outre, pendant un état de surcharge et en réponse au rejet, par la fonction d'accès et de mobilité (104), d'une requête de strate de non-accès, NAS, le fait de faire en sorte qu'une valeur d'un temporisateur de gestion de mobilité soit envoyée afin d'empêcher qu'au moins certaines requêtes NAS pour des procédures de gestion de mobilité ne soient lancées par un équipement utilisateur parmi les au moins certains équipements utilisateurs.

15. Programme informatique comprenant un code, dans lequel, lorsque le programme informatique est exécuté par au moins un processeur d'un appareil de réseau central, il est fait en sorte que l'appareil de réseau central réalise le procédé selon l'une quelconque des revendications 8 à 14.
